# EUROPEAN PATENT APPLICATION

(11) **EP 1 637 977 A1**
(43) Date of publication of application: **22.03.2006**
(21) Application number: 04255723.1
(22) Date of filing: 21.09.2004
(51) Int. Cl.: G06F 3/023, G06F 17/27

(54) **Mobile wireless communiations device providing enhanced predictive word entry and related methods**

(71) Applicant: Research In Motion Limited, Waterloo, Ontario N2L 3W8 (CA)
(72) Inventor: Scott, Sherryl Lee, Toronto, Ontario, M5T 1Y9 (CA)
(74) Representative: Hibbert, Juliet Jane Grace

(57) **Abstract**

A mobile wireless communications device may include a portable, handheld housing, and a display and keypad carried by the portable, handheld housing. The keypad may include a plurality of multi-symbol keys each having indicia of a plurality of respective symbols thereon, and a predetermined multi-symbol key may have a comma/apostrophe symbol and at least one other symbol thereon. A controller may also be carried by the portable, handheld housing and connected to the display and the keypad. The controller may be for generating a menu of possible desired words including at least one word with a comma and at least one word with an apostrophe based upon activation of the predetermined multi-symbol key having the comma/apostrophe symbol and at least one other symbol thereon.

## Description

### Field of the Invention

The present invention relates to the field of communications devices, and, more particularly, to mobile wireless communications devices and related methods.

### Background of the Invention

Cellular communications systems continue to grow in popularity and have become an integral part of both personal and business communications. Cellular phones allow users to place and receive voice calls most anywhere they travel. Moreover, as cellular telephone technology has increased, so too has the functionality of cellular devices. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network.

Even so, as the functionality of cellular communications devices continues to increase, so too does the demand for smaller devices which are easier for users to carry. As a result, some cellular communications devices which also provide email or text messaging features do not have enough space to provide a full keypad with all of the traditional QWERTY keys. As a result, such devices typically utilize shared or multi-symbol keys, some of which are used to enter multiple letters, numbers, and/or punctuation symbols, for example. Of course, this makes it more challenging for users to enter desired symbols, as pressing a multi-symbol key may cause the device to display one of the other symbols shared by that key instead of the desired symbol.

Various approaches are therefore used to facilitate typing with multi-symbol keys. One approach is to enable multi-tap typing, where pressing a key a certain number of times enters the corresponding symbol on the key (e.g., pressing a key twice enters the second symbol on the key). While this makes it easier for a user to select the desired symbol, it may still be somewhat cumbersome in that it may require a user to press the keys many times to type relatively few letters.

Another approach to facilitate word entry with multi-symbol keys is predictive word entry. That is, a software module run by the wireless device's processor attempts to predict the particular word or phrase the user is trying to type based upon the combination of keys that are pressed or actuated. An example of a cellular telephone device including a predictive text editor application is disclosed in U.S. Patent No. 6,542,170 to Williams et al. This device includes a display, a keypad having a plurality of keys each associated with several letters, and a processor controlling the display in accordance with the operation of the keypad. The processor runs a predictive editor program for generating an output including a word matching a received string of ambiguous key strokes. While the predictive editor program is active, pressing the "1" key on the phone will allow a "smart" insertion of punctuation. That is, the predictive editor program tries to predict, based on the situation, which commonly used punctuation mark is intended. These may include the period, comma, question mark, exclamation point, and apostrophe. The default value will most often suggest a period, if no other matches seem appropriate. A match function is performed by pressing the "*" key, which allows the user to toggle through a list of symbol choices which may include a period, comma, etc. Despite the advantages provided by such devices, further predictive typing/editing functionality may be desirable in certain applications.

### Summary of the Invention

In view of the foregoing background, it is therefore an object of the present invention to provide a mobile wireless communications device which provides enhanced predictive word entry and related methods.

This and other objects, features, and advantages in accordance with the present invention are provided by a mobile wireless communications device which may include a portable, handheld housing, and a display and keypad carried by the portable, handheld housing. The keypad may include a plurality of multi-symbol keys each having indicia of a plurality of respective symbols thereon, and a predetermined multi-symbol key may have a comma/apostrophe symbol and at least one other symbol thereon. The mobile wireless communications device may also include a controller carried by the portable, handheld housing and connected to the display and the keypad. The controller may be for generating a menu of possible desired words including at least one word with a comma and at least one word with an apostrophe based upon activation of the predetermined multi-symbol key having the comma/apostrophe symbol and at least one other symbol thereon.

Accordingly, only a single multi-symbol key need be included in the keypad, even though the comma/apostrophe symbol may be ambiguous to users. This is because the user will be provided with possible desired words with both apostrophes and commas, if applicable, regardless of whether the user intended a comma or apostrophe. As a result, the multi-symbol key layout may be simplified, while still providing a relatively quick predictive determination of the user's desired word.

The mobile wireless communications device may also include a memory carried by the portable, handheld housing and connected to the controller for storing a list of words. The controller may thus compare respective symbols corresponding to actuated multi-symbol keys to the list of words, and generate the menu of possible desired words based thereon.

Furthermore, the mobile wireless communications device may also include at least one input device carried by the portable, handheld housing, and the controller may cause different possible desired words in the menu to be highlighted on the display based upon the at least one input device. By way of example, the at least one input device may be a scroll wheel.

In addition, the mobile wireless communications device may include a wireless transceiver (e.g., a wireless LAN transceiver) carried by the portable, handheld housing, and the controller may cooperate with the wireless transceiver to communicate emails over a wireless network (e.g., a wireless LAN). The mobile wireless communications device may also include a cellular transceiver for communicating over a cellular communications network.

More particularly, the keypad may further include an alternate function key, and the predetermined multi-symbol key may be actuated to enter the comma/apostrophe symbol by first pressing the alternate function key. Also, the symbols may be letters, and the multi-symbol keys may be arranged to define a QWERTY layout. Moreover, a set of the multi-symbol keys may have numeric indicia thereon, and the set of multi-symbol keys may be arranged to define a telephone keypad layout.

A method for using a mobile wireless communications device, such as the one described briefly above, may include generating a menu of possible desired words including at least one word with a comma and at least one word with an apostrophe based upon activation of the predetermined multi-symbol key having the comma/apostrophe symbol and at least one other symbol thereon.

### Brief Description of the Drawings

FIG. 1 is front elevational view of a mobile wireless communications device in accordance with the present invention.

FIG. 2 is schematic block diagram of the mobile wireless communications device of FIG. 1.

FIG. 3 is a screen print of the display of the mobile wireless communications device of FIG. 1 illustrating a menu of possible desired words including both commas and apostrophes.

FIG. 4 is a schematic block diagram of an alternate embodiment of the mobile wireless communications device of FIG. 1.

FIG. 5 is a flow diagram illustrating a mobile wireless communications method in accordance with the present invention.

FIG. 6 is a schematic block diagram of an exemplary mobile wireless communications device for use with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternate embodiments.

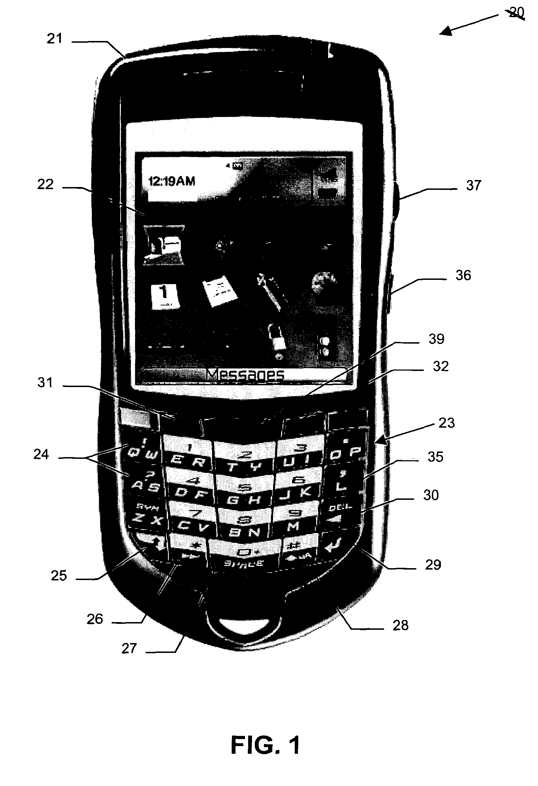

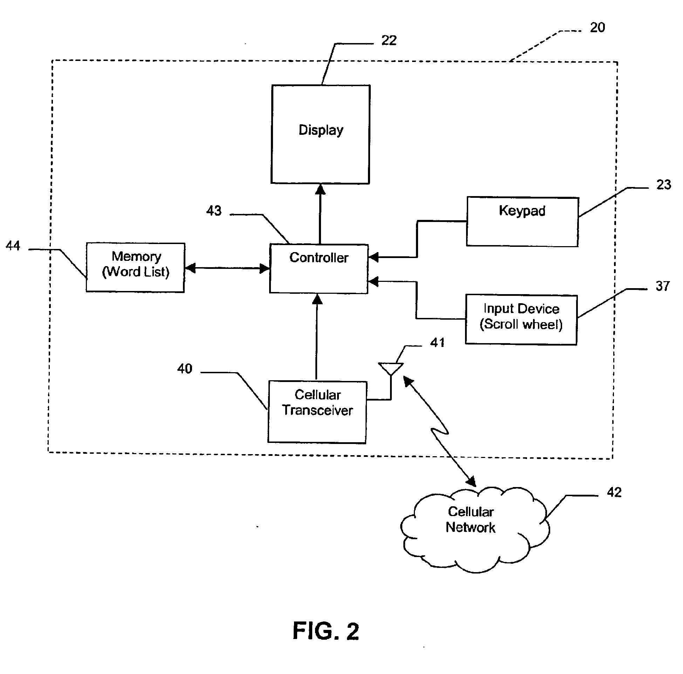

Referring initially to FIGS. 1 and 2, a mobile wireless communications device **20** in accordance with the invention is first described. In the illustrated embodiment, the device **20** is a mobile cellular communications device which includes a cellular transceiver **40** and associated antenna **41** for communicating over a cellular network **42.** In particular, the cellular transceiver **40** may be used for cellular telephone calls as with traditional cellular telephones, and it also preferably cooperates with a controller **43** for sending other data, such as email/Internet data, over the cellular network **42** as well, as will be appreciated by those skilled in the art.

The device **20** illustratively includes a portable, handheld housing **21,** and a display **22** and keypad **23** carried by the housing. A back button **36** and a scroll wheel **37** are also carried by the housing **21** and are connected to the controller **43** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 1, the multi-symbol keys **24** are arranged in the first three rows on the keypad **23** below the send and end keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25-29)** are arranged in five columns. The multi-symbol keys **24** in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

As discussed briefly above, the reason that more than one letter appears on most of the keys **24** is so that less than a full set of QWERTY keys, as found on a traditional computer/typewriter keyboard, can be used to access all of the English alphabet letters. This advantageously allows the footprint of the keypad **23** to remain relatively small which, in turn, allows the overall size of the mobile wireless communications device **20** to be decreased as well.

Yet, as also mentioned above, the tradeoff with placing multiple symbols on a single key is that typing (e.g., typing emails) becomes more difficult for users. To make typing easier, the controller **43** preferably allows symbols/text to be entered in two different modes, namely a multi-tap mode and a predictive mode. In the multi-tap mode, a user enters a desired symbol by pressing a given key a number of times corresponding to its position on the key. Thus, for example, for a user to enter a "W," she would press the QW/! key twice. To enter an exclamation point, the user would press the alternate function key **25** before pressing the QW/! key.

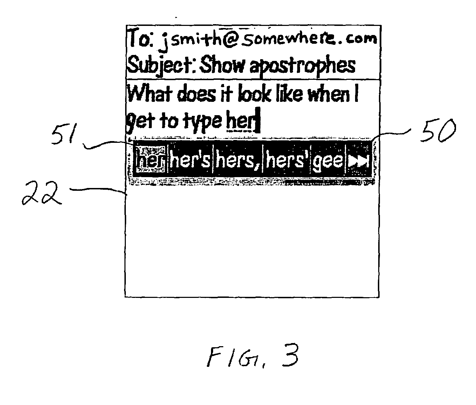

Referring more particularly to FIG. 3, in a predictive mode, the controller **43** compares respective symbols corresponding to actuated multi-symbol keys **24** to a list (i.e., dictionary) of words and/or phrases, which is stored in a memory **44.** The controller **43** generates a menu **50** of possible desired words based upon the combination of keys **24** that are pressed, as will be appreciated by those skilled in the art. The possible desired words may be generated according to various rules, such as a general frequency of use of the words, a frequency of use of the words by the user, alphabetically, etc., or a combination thereof.

Furthermore, the controller then generates a cursor **51** on the display **22** which highlights different possible desired words in the menu **50** based upon the scroll wheel **37.** That is, the cursor **51** can be moved back and forth through the menu **50** to highlight the various words therein for selection by the user. The user can select a given word by pressing the scroll wheel **37** inward, or by pressing the return key **29,** for example. Once a desired word is selected, the controller **43** inserts the selected word in the active document (e.g., an email, notepad document, etc.), and the process begins again when the user starts entering symbols for a next word.

To provide further space savings on the keypad **23,** a predetermined multi-symbol key **35** shares the "L" symbol and a comma/apostrophe symbol. Of course, the comma/apostrophe symbol could be located on another key in other embodiments. By "comma/apostrophe symbol" it is meant that the respective symbols used to represent commas and apostrophes are very similar in appearance, and therefore the two are generally ambiguous unless they are positioned relative to a letter. That is, seeing a comma/apostrophe symbol in isolation would not likely allow someone to discern which symbol was intended unless the symbol was positioned adjacent the bottom of a line of text as a comma, or adjacent the top of the line as an apostrophe.

Thus, because the keypad **23** has only a single comma/apostrophe symbol on the key **35,** it is possible that a user typing on the keypad might mistakenly press this key thinking it is an apostrophe when it is in fact a comma, or vice-versa. In the exemplary embodiment, the key **35** causes a comma to be generated in the multi-tap mode when the alternate function key **25** is first pressed, although an apostrophe may instead be provided in other embodiments. It should be noted that an apostrophe (as well as other symbols) may be selected through a separate symbol screen (not shown), which the controller **43** generates upon pressing the alternate function key **25** followed by the ZX/SYM key.

When in the predictive mode, the controller **43** advantageously generates the menu **51** of possible desired words to include at least one word with a comma, and at least one word with an apostrophe based upon activation of the comma/apostrophe key **35.** In the example illustrated in FIG. 3, for the current word being typed by a user (as indicated with dashed underlining) the controller **43** displays the letters h, e, and r. The user then presses the comma/apostrophe key **35,** which causes the controller **43** to recognize several possible desired words, one of which includes a comma ("hers,"), and two of which have apostrophes ("her's" and "hers"'). Of course, the controller **43** may determine that other words without a comma/apostrophe are also possible desired words, such as "her" and "gee" in the present example.

Accordingly, even though the comma/apostrophe symbol may be ambiguous to users, only a single multi-symbol key with a comma/apostrophe symbol need be included in the keypad **23** because users will advantageously be provided with choices of possible desired words including both commas and apostrophes upon pressing this key when the controller **43** is in a predictive mode. As a result, the number of keys on the keypad **23** is reduced, while still allowing a relatively quick predictive determination of the user's desired word or phrase.

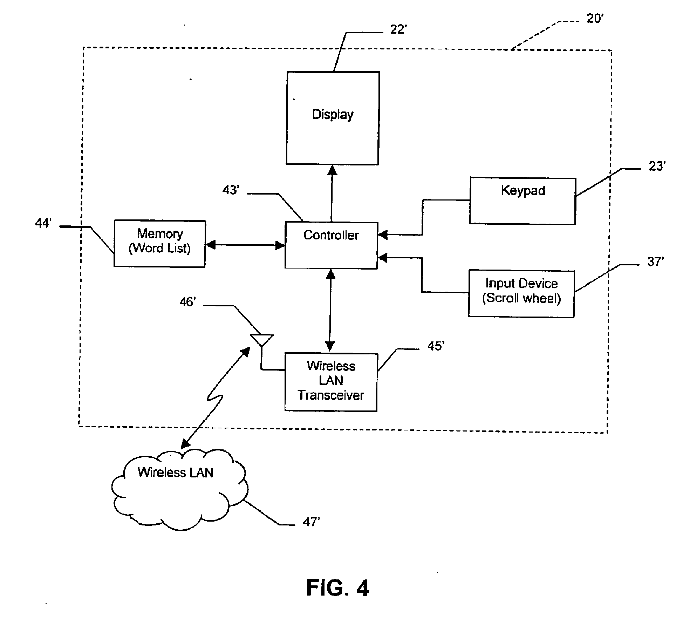

Turning additionally to FIG. 4, the mobile wireless communications device **20'** may optionally include a wireless transceiver **45',** such as a wireless local area network (LAN) (e.g., IEEE802.11Bluetooth) transceiver, and associated antenna **46'** carried by the portable, handheld housing. The controller **43'** cooperates with the wireless transceiver **45'** to communicate information, such as voice, email, or Internet data, over a wireless personal or local area network **47',** as will be appreciated by those skilled in the art. In other embodiments, both the wireless LAN transceiver **45'** and the cellular transceiver **40** (or another type of wireless transceiver) of FIG. 2 may be included in the same device, as will be appreciated by those skilled in the art.

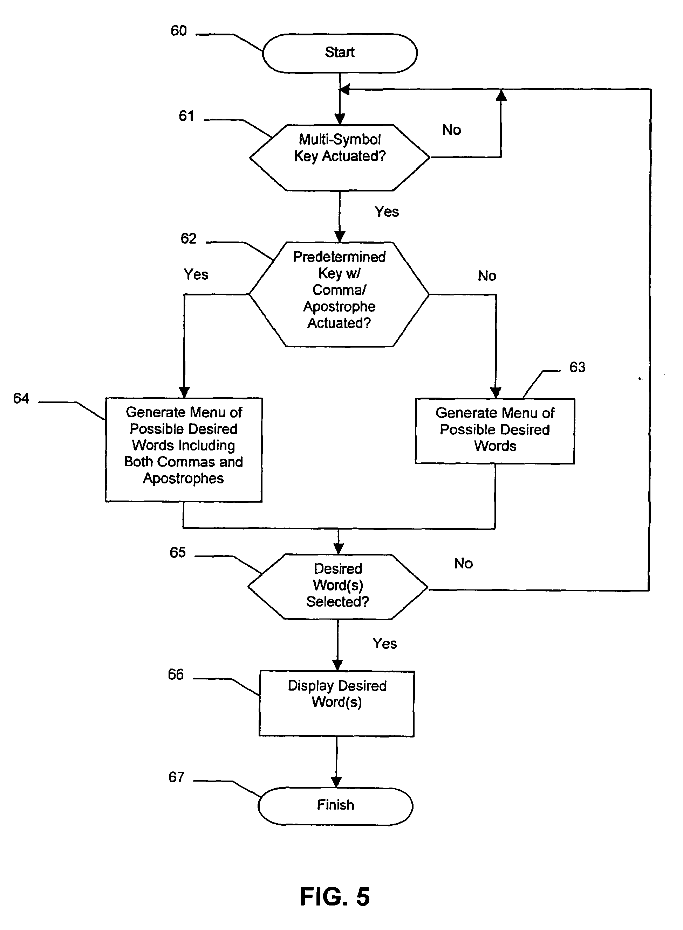

A method for using the mobile wireless communications device **20** in accordance with the invention is now described with reference to FIG. 5. The method begins (Block **60)** with detecting actuation of multi-symbol keys **24,** at Block **61,** and, more particularly, whether the comma/apostrophe key **35** has been actuated to enter a comma/apostrophe (i.e., by first pressing the alternate function key **25),** at Block **62.** If a comma/apostrophe is not entered, then the controller **43** compares the respective symbols associated with the actuated keys **24** to the list of words to generate the menu **50** of possible desired words, at Block **63,** as described above. If a comma/apostrophe is entered, then the controller **43** generates the menu **50** to include one or more possible desired words with a comma, and one or more possible desired words with an apostrophe, at Block **64,** as further described above.

Once the user selects a desired possible word form the menu **50,** at Block **65,** the word is displayed on the display **22,** at Block **66,** thus concluding the illustrated method (Block **67).** Of course, it will be appreciated that the above-described method would be repeated as the user continues entering further words. Moreover, if a desired word is not selected, the controller **43** will also return to the step illustrated at Block **61** as the user actuates additional keys.

The controller **43** may be implemented with a microprocessor and associated software modules to be executed thereby, as will be appreciated by those skilled in the art. Moreover, the keypad **23** need not include soft keys as illustrated in FIG. 1, but instead may include other types of keys as well, such as touch keys on a display, for example. It should also be noted that various other multi-symbol key configurations may be used other than the exemplary configuration shown, and a QWERTY layout need not be used in all embodiments. Similarly, other arrangements of numbers on the keypad **23** may be used as well.

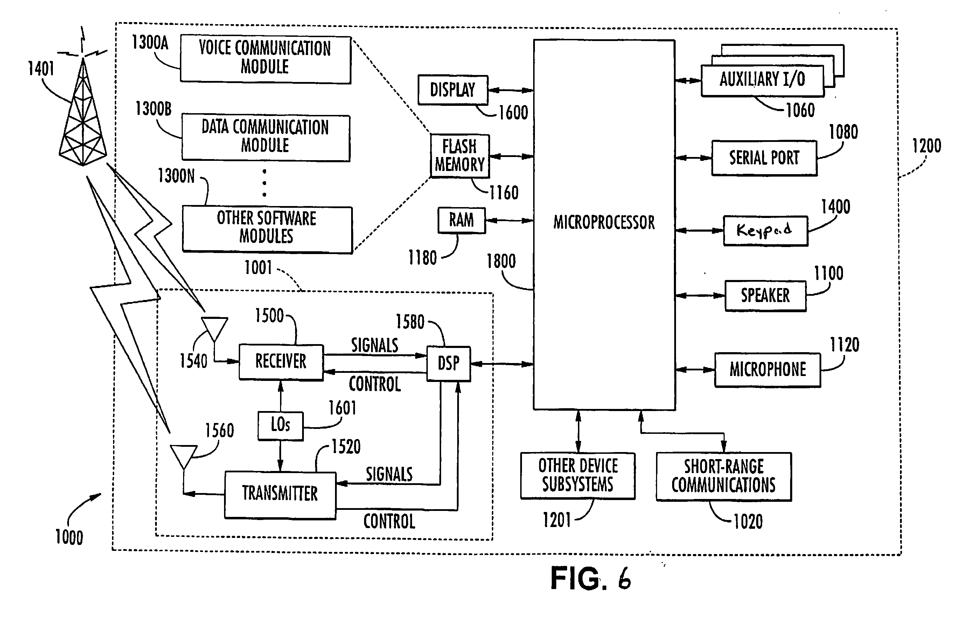

Another example of a hand-held mobile wireless communications device **1000** that may be used in accordance the present invention is further described in the example below with reference to FIG. 6. The device **1000** includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device comprising:
a portable, handheld housing;
a display carried by said portable, handheld housing;
a keypad carried by said portable, handheld housing and comprising a plurality of multi-symbol keys each having indicia of a plurality of respective symbols thereon, a predetermined multi-symbol key having a comma/apostrophe symbol and at least one other symbol thereon; and
a controller carried by said portable, handheld housing and connected to said display and said keypad, wherein the controller is operable to generate a menu of possible desired words including at least one word with a comma and at least one word with an apostrophe based upon activation of said predetermined multi-symbol key having the comma/apostrophe symbol and at least one other symbol thereon.

2. The mobile wireless communications device of Claim 1 further comprising a memory carried by said portable, handheld housing and connected to said controller for storing a list of words; and wherein said controller is operable to compare respective symbols corresponding to actuated multi-symbol keys to the list of words, and to generate the menu of possible desired words based thereon.

3. The mobile wireless communications device of Claim 1 or Claim 2 further comprising at least one input device carried by said portable, handheld housing, and wherein said controller is operable to cause different possible desired words in the menu to be highlighted on said display based upon said at least one input device.

4. The mobile wireless communications device of Claim 3 wherein said at least one input device comprises a scroll wheel.

5. The mobile wireless communications device of any preceding claim further comprising a cellular transceiver carried by said portable, handheld housing for communicating over a cellular communications network.

6. The mobile wireless communications device of any preceding claim further comprising a wireless transceiver carried by said portable, handheld housing; and wherein said controller is operable to cooperate with said wireless transceiver to communicate emails over a wireless network.

7. The mobile wireless communications device of Claim 6 wherein said wireless transceiver comprises a wireless local area network (LAN) transceiver for communicating emails over a wireless LAN.

8. The mobile wireless communications device of any preceding claim wherein said keypad further comprises an alternate function key, and wherein said predetermined multi-symbol key is actuable to enter the comma/apostrophe symbol by first pressing the alternate function key.

9. The mobile wireless communications device of any preceding claim wherein the symbols comprise letters; and wherein said multi-symbol keys are arranged to define a QWERTY layout.

10. The mobile wireless communications device of any preceding claim wherein a set of said multi-symbol keys have numeric indicia thereon, and wherein the set of multi-symbol keys are arranged to define a telephone keypad layout.

11. A method for using a mobile wireless communications device comprising a portable, handheld housing, a display carried by the portable, handheld housing, and a keypad carried by the portable, handheld housing and comprising a plurality of multi-symbol keys each having indicia of a plurality of respective symbols thereon, a predetermined multi-symbol key having a comma/apostrophe symbol and at least one other symbol thereon, the method comprising:
generating a menu of possible desired words including at least one word with a comma and at least one word with an apostrophe on the display based upon activation of the predetermined multi-symbol key having the comma/apostrophe symbol and at least one other symbol thereon.

12. The method of Claim 11 wherein generating a menu of possible desired words comprises comparing respective symbols corresponding to actuated multi-symbol keys to a list of words, and generating the menu of possible desired words based thereon.

13. The method of Claim 11 or Claim 12 wherein the mobile wireless communications device further comprises at least one input device carried by the portable, handheld housing; the method further comprising causing different possible desired words in the menu to be highlighted on the display based upon the at least one input device.

14. The method of any of Claims 11 to 13 wherein the mobile wireless communications device further comprises a cellular transceiver carried by the portable, handheld housing; the method further comprising communicating over a cellular communications network using the cellular transceiver.

15. The method of any of Claims 11 to 14 wherein the mobile wireless communications device further comprises a wireless transceiver carried by the portable, handheld housing; the method further comprising communicating emails over a wireless network using the wireless transceiver.

16. The method of Claim 15 wherein the wireless transceiver comprises a wireless local area network (LAN) transceiver for communicating emails over a wireless LAN.
